# EUROPÄISCHE PATENTSCHRIFT

(11) **EP 2 729 836 B1**
(45) Veröffentlichungstag und Bekanntmachung des Hinweises auf die Patenterteilung: **20.02.2019**
(21) Anmeldenummer: 11797303.2
(22) Anmeldetag: 28.11.2011
(51) Int. Cl.: G02B 6/44

(54) **NETZABSCHLUSS-EINRICHTUNG FÜR OPTISCHE NETZWERKE**
NETWORK TERMINATION DEVICE FOR OPTICAL NETWORKS
DISPOSITIF DE TERMINAISON DE RÉSEAU POUR RÉSEAUX OPTIQUES

(30) Priorität: 06.07.2011 DE 102011106987; 07.07.2011 DE 102011107389
(43) Veröffentlichungstag der Anmeldung: 14.05.2014
(73) Patentinhaber: Deutsche Telekom AG, 53113 Bonn (DE)
(72) Erfinder: NEHNE, Fabian, 50677 Köln (DE); KLÄBER, Nico, 50677 Köln (DE); SEIFERT, Caroline, 53227 Bonn (DE)
(74) Vertreter: Schrooten, Rolf
(86) Internationale Anmeldenummer: PCT/EP2011/071219
(87) Internationale Veröffentlichungsnummer: WO 2013/004316

(56) Entgegenhaltungen:
- WO-A1-2010/034399
- US-A1- 2010 129 028

## Beschreibung

Die vorliegende Erfindung betrifft eine Netzabschluss-Einrichtung für optische Netzwerke nach dem Oberbegriff von Anspruch 1. Die Einrichtung umfasst eine Basiseinheit, in der eine oder mehrere optische Fasern aufgenommen werden können, die insbesondere in der Form eines oder mehrerer Glasfaserkabelenden vorliegen. Ferner weist die Einrichtung einen Deckel auf, durch den die Basiseinheit mit dem darin aufgenommenen Fasern oder Kabeln abgedeckt und/oder verschlossen werden kann. Außerdem sind Mittel vorgesehen, durch die ein Netzabschluss-Terminal an der Basiseinheit aufgenommen bzw. befestigt werden kann. Dieses Netzabschluss-Terminal umfasst seinerseits mindestens ein Benutzermodul für einen oder mehrere von einem Endverbraucher gewünschte Dienste, beispielsweise für eine Telefonverbindung, eine Fernsehverbindung oder eine Datenaustauschverbindung, insbesondere eine Internetverbindung.

Derartige Einrichtungen sind insofern im Rahmen von FTTH ("Fiber to the home") oder insbesondere für die Verwendung in Räumen von Endverbrauchern bestimmt und geeignet. Die Räume können auch ein Büro oder öffentliche bzw. gewerblich genutzte Räume sein. Mittels des Netzabschluss-Terminals, das auch als ONT ("Optical Network Terminal") bezeichnet wird, können dann in den Räumen des Endverbrauchers weitere Geräte mit den optischen Wellenleiterfasern verbunden werden, wobei die Module des Netzabschluss-Terminals die über die Fasern empfangenen optischen Signale in Signale umwandeln, die jeweils für die betreffenden Geräte geeignet sind.

Zur Vorbereitung eines Glasfaseranschlusses in einem Raum eines Endverbrauchers kann die Basiseinheit der Netzabschluss-Einrichtung vorzugsweise an einer Wandfläche montiert werden. Erst zu einem späteren Zeitpunkt wird die Einrichtung dann um ein geeignetes Netzabschluss-Terminal ergänzt. Um eine möglichst große Flexibilität zu bieten, ist das Netzabschluss-Terminal dabei mit den für die gewünschten Dienste erforderlichen Modulen an die jeweiligen Wünsche des Benutzers anpassbar. Es kann leicht an ein Faserkabelende der Netzabschluss-Einrichtung angeschlossen und ebenso leicht an der Basiseinheit angebracht werden. Bei Bedarf ist auch ein einfacher Austausch gegen ein anderes Netzabschluss-Terminal möglich.

Es ist bekannt, die Basiseinheit und das Netzabschluss-Terminal in zwei voneinander unabhängigen Gehäusen unterzubringen. Dadurch entstehen unnötige Kosten für den Anbieter der Glasfaserkabel und ein zusätzlicher Platzverbrauch am Kundenanschluss.

Aus der DE 10 2009 008 068 A1 ist ein Netzabschluss-Gehäuse für einen optischen Netzwerkabschluss bekannt. Dieses Netzabschluss-Gehäuse umfasst eine Faserbox, in der in einem ersten Bereich mindestens ein Glasfaserkabel in ausreichender Länge in einer oder mehreren Schleifen gewickelt aufgenommen ist. In einem zweiten Bereich der Faserbox ist das Ende des mindestens einen Glasfaserkabels mit Steckern bzw. Steckverbindern für die spätere weitere Verkabelung abgelegt, wobei die Stecker in Staubschutzkappen aufgenommen sein können. Die Faserbox ist durch einen Deckel verschließbar, der bei Bedarf auch versiegelt werden kann.

US2011249941 offenbart eine Einrichtung für optische Netzwerke, mit einer Basiseinheit zur Aufnahme von optischen Fasern, einem Deckel, einer Wanddose, und Lichtwellenleiterverbindern mit Etiketten.

US2010129028 offenbart eine Netzabschluss-Einrichtung für optische Netzwerke und mindestens einem daran anbringbaren Netzabschluss-Terminal, mit einem Deckel, und Mitteln zur Befestigung. Das Netzabschluss-Terminal weist eine Kennung auf, die durch eine Aussparung des Deckels sichtbar ist.

Zu einem späteren Zeitpunkt kann der eigentliche optische Netzabschluss ohne weitere Baumaßnahmen nachgerüstet werden. Dazu wird dann eine separate, sogenannte Netzabschlussbox, in der sich ein oder mehrere Benutzermodule für einen oder mehrere vom Kunden gewünschte Dienste mit entsprechenden Anschlussbuchsen befinden, auf die Faserbox aufgesetzt und verankert. Dabei wird das Ende des mindestens einen Glasfaserkabels mit den daran befindlichen Steckern durch Öffnen einer in dem Deckel extra hierfür vorgesehenen Klappe aus der Basis- oder Faserbox heraus und in die Netzabschlussbox hineingeführt und dort an vorbereiteten internen Steckanschlüssen angeschlossen. Durch die beiden aufeinander aufgesteckten Boxen ergibt sich dabei ein Sandwich-Aufbau mit einem entsprechend weit von der Wandfläche vorstehenden Aufbau.

Aufgabe der vorliegenden Erfindung ist es, eine konstruktiv einfache und leicht handhabbare Netzabschluss-Einrichtung für optische Netzwerke der eingangs genannten Art zu schaffen, die eine besonders einfache Aktivierung oder Freischaltung bestimmter vom Endverbraucher gewünschter Dienste ermöglicht.

Diese Aufgabe wird erfindungsgemäß durch eine Netzabschluss-Einrichtung nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die Basiseinheit mit einer Kennung aufweist, durch die der Netzabschluss des Endverbrauchers eindeutig identifiziert werden kann, und dass die Kennung derart angebracht ist, dass sie auch bei einem angebrachten Netzabschluss-Terminal von außen gut erkennbar ist. Die Kennung ist also so angeordnet, dass sie auch von einem später an den dafür vorgesehenen Mitteln zu montierenden Netzabschluss-Terminal nicht verdeckt wird.

Der Hauptvorteil liegt dabei darin, dass unabhängig von der Art des für die gewünschten Dienste anzubringenden Netzabschluss-Terminals eine den Kundenanschluss eindeutig identifizierende Kennung jederzeit leicht und schnell abgelesen und weiterverwendet werden kann, ohne dass hierfür weitere Hilfsmittel erforderlich sind oder das Netzabschluss-Terminal von der Basiseinheit abgenommen werden muss. Deshalb kann der Benutzer die jederzeit gut erkennbaren Kennungsdaten leicht zur Aktivierung oder Freischaltung des Anschlusses oder bestimmter Dienste an diesem Anschluss in einem hierfür vorgesehenen Eingabefeld oder Dialog eingeben bzw. angeben.

Auf diese konstruktiv besonders einfache Weise wird so eine wirkungsvolle Unterstützung beim Einrichten, Aktivieren oder Freischalten geboten, die es auch dem Endverbraucher leicht ermöglicht, gewünschten Dienste einzurichten und zu nutzen.

Auch können so beispielsweise im Rahmen eines bestehenden Vertragsverhältnisses gebuchte Dienste, gegebenenfalls auch nur vorübergehend, leicht an einem anderen Anschluss in einem anderen Gebäude aktiviert werden, indem die neue Anschlusskennung abgelesen und insbesondere in Verbindung mit Kundendaten entsprechend weiterverwendet wird.

Die erfindungsgemäße Netzabschluss-Einrichtung ist bei einfacher Konstruktion kostengünstig herzustellen und leicht zu montieren und handzuhaben.

Besonders vorteilhaft ist es, wenn das Netzabschluss-Terminal in seinem Gehäuse eine Aussparung aufweist, durch die die Kennung der Basiseinheit sichtbar ist, wenn das Netzabschluss-Terminal an der Basiseinheit angebracht ist. Die Aussparung kann dabei sowohl im Bereich eines Gehäuserandes als nach außen offene Aussparung oder in der Form eines ringsum vom Gehäuse umgebenden Fensters ausgebildet sein.

Nach einer besonders bevorzugten Ausführungsform der Erfindung ist vorgesehen, dass auch der Deckel eine entsprechende Aussparung aufweist, durch die die Kennung der Basiseinheit sichtbar ist, wenn der Deckel an der Basiseinheit angebracht ist um diese abzudecken oder zu verschließen.

Die Aussparungen können in einer besonders einfachen Ausführungsform offen als Durchbruch ausgeführt sein. Bevorzugt ist aber, dass die Aussparung im Deckel und/oder in dem Gehäuse des Netzabschluss-Terminals mit einem durchsichtigen oder transparenten Material ausgefüllt ist. Hierdurch kann insbesondere auch das Eindringen von Staub verhindert werden.

Eine für den Endverbraucher besonders komfortable Ausführungsform kann dadurch erreicht werden, dass die Kennung des Anschlusses in einem oberen Bereich der Basiseinheit angebracht ist, wobei sie vorteilhafterweise so orientiert ist, dass sie von schräg oben, d.h. in einem vorzugsweise spitzen Winkel zur Wandfläche, an der die Basiseinheit montiert ist, zu sehen und abzulesen ist.

Besonders vorteilhaft ist es, wenn die Mittel zur Aufnahme und/oder Befestigung des Netzabschluss-Terminals an der Basiseinheit vorgesehen sind. Das Netzabschluss-Terminal kann dabei nur bei abgenommenem Deckel an der Basiseinheit angebracht, vorzugsweise formschlüssig und/oder kraftschlüssig daran montiert werden.

Gemäß einer ersten bevorzugten Ausführungsform der Erfindung ist vorgesehen, dass der Deckel zumindest annähernd die gleiche Form und Größe wie das Gehäuse des Netzabschluss-Terminals aufweist.

Gemäß einer alternativen Ausführungsform der Erfindung kann der Deckel auch schalenförmig und in einer Größe ausgebildet sein, dass das Netzabschluss-Terminal zwischen der Basiseinheit und dem Deckel, vorzugsweise vollständig in dem Deckel aufgenommen werden kann.

Dabei ist es besonders günstig, wenn der Deckel über eine scharnierartige Verbindung schwenkbar mit der Basiseinheit verbunden ist, so dass der Deckel nicht verloren werden kann. Vorzugsweise ist der Deckel dabei einstückig mit der Basiseinheit ausgeführt. Das Netzabschluss-Terminal kann von dem Deckel abgedeckt oder verschlossen werden, wenn es an der Basiseinheit angebracht ist.

Vorteilhafterweise kann der Deckel dabei mindestens eine Öffnung aufweisen, durch die hindurch bei aufgesetztem Deckel Kabel an ein Netzabschluss-Terminal angeschlossen werden können, welches an die Basiseinheit angebracht und von dem Deckel abgedeckt ist. Vorzugsweise sind mehrere Öffnungen vor den Anschlussbuchsen des Netzabschluss-Terminals vorgesehen, so dass für mehrere daran anzuschließende Kabel jeweils eine eigene Öffnung im Deckel angeordnet ist, was den Anschluss auch für Laien einfacher macht.

Besonders leicht kann der Anschluss von Kabeln ausgeführt werden, wenn die Wände der im Deckel vorgesehenen Öffnungen in der Form einer schräg oder konisch zulaufenden Führung ausgebildet sind, die zu den Anschlussbuchsen des Netzabschluss-Terminals hinführt, so dass der Stecker auch "blind" von unten eingeschoben und sicher eingesteckt werden kann. So können weitere Komponenten, beispielsweise eine externe Stromversorgung oder weitere Geräte oder Systeme, auch dann bequem und schnell in nach unten mündenden Buchsen des Netzabschluss-Terminals angeschlossen werden, wenn die Basiseinheit relativ weit unten bzw. kurz über dem Boden an einer Wand montiert ist.

Um auch weitere Geräte, Module oder Netzabschluss-Terminals (ONT) verwenden zu können, ist es besonders vorteilhaft, wenn an der Basiseinheit mindestens eine Verbindungseinrichtung vorgesehen ist, durch die ein in der Basiseinheit endendes Faserkabel mit einem weiteren Kabel verbunden werden kann. Auch kann an der Basisstation vorteilhafterweise eine Halteeinrichtung vorgesehen sein, in der durch eine Spleißverbindung miteinander verbundene Bereiche optischer Fasern insbesondere klemmend aufnehmbar sind, um die Spleißverbindung von möglichen Zugkraftbelastungen freizuhalten.

Besonders vorteilhaft ist es, wenn die Basiseinheit mindestens eine Halteeinrichtung aufweist, mittels der optische Fasern, die in der Form eines Glasfaserkabelendes mit einem daran montierten Stecker vorliegen, formschlüssig und/oder kraftschlüssig gehalten werden können. Vorzugsweise ist die Halteeinrichtung dabei durch mindestens eine Kabelklemme gebildet, in der das Glasfaserkabel klemmend gehalten wird. Später kann das Glasfaserkabel auch von Nichtfachpersonal so weit wie erforderlich von der Halteeinrichtung gelöst und der Stecker dann an ein ONT angeschlossen werden.

Günstig ist es dabei ferner, wenn die Halteinrichtung eine Aufnahme mit einer Schutzkappe für den freien Kontaktbereich des am Glasfaserkabelende montierten Steckers umfasst, wobei die Schutzkappe derart an der Aufnahme befestigt ist, dass sie auch dann an der Aufnahme verbleibt, wenn der Stecker zum Anschluss an ein ONT aus der Aufnahme entnommen wird. Der Anschluss gestaltet sich dadurch noch einfacher.

Vorteilhafterweise kann der am Glasfaserkabelende montierte Stecker selbstverriegelnd ausgeführt sein, um ein unbeabsichtigtes Herausziehen aus einem ONT zu verhindern.

Gegenstand der vorliegenden Erfindung ist ferner eine Kombination bestehend aus einer Netzabschluss-Einrichtung der vorangehend beschriebenen Art und mindestens einem Netzabschluss-Terminal, das daran angebracht werden kann.

Weitere Vorteile und Merkmale der Erfindung ergeben sich aus der nachfolgenden Beschreibung und den in den Zeichnungen dargestellten Ausführungsbeispielen. Es zeigen:
- Figur 1:: Eine erste Ausführungsvariante einer erfindungsgemäßen Netzabschluss-Einrichtung ohne ONT;
- Figur 2:: Netzabschluss-Einrichtung aus Figur 1 mit abgenommenem Deckel;
- Figur 3:: Netzabschluss-Einrichtung mit einem angeschlossenem aber noch nicht montiertem ONT;
- Figur 4:: Netzabschluss-Einrichtung mit fertig montiertem ONT.
- Figur 5:: eine zweite Ausführungsvariante einer erfindungsgemäßen Netzabschluss-Einrichtung mit abgenommenem Deckel und mit anzubringendem und noch nicht angeschlossenem ONT;
- Figur 6:: eine dritte Ausführungsvariante einer erfindungsgemäßen Netzabschluss-Einrichtung mit aufgeklapptem Deckel; und
- Figur 7:: Netzabschluss-Einrichtung aus Figur 6 mit einem daran angebrachten und angeschlossenen ONT.

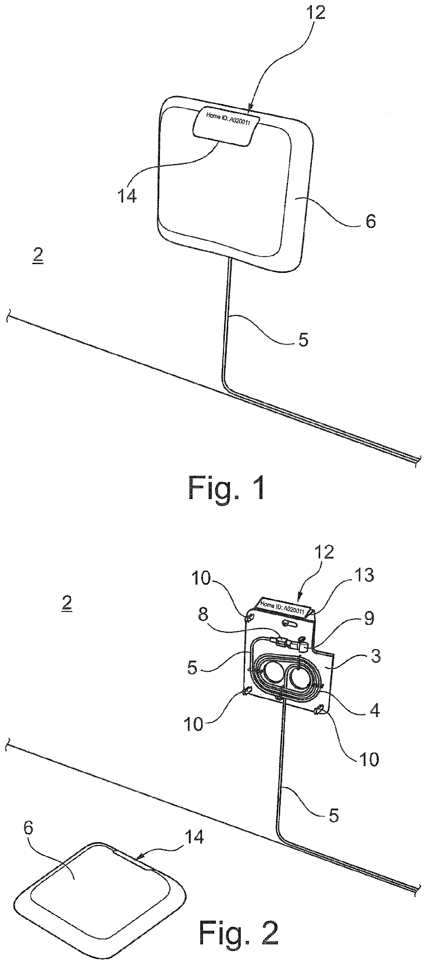

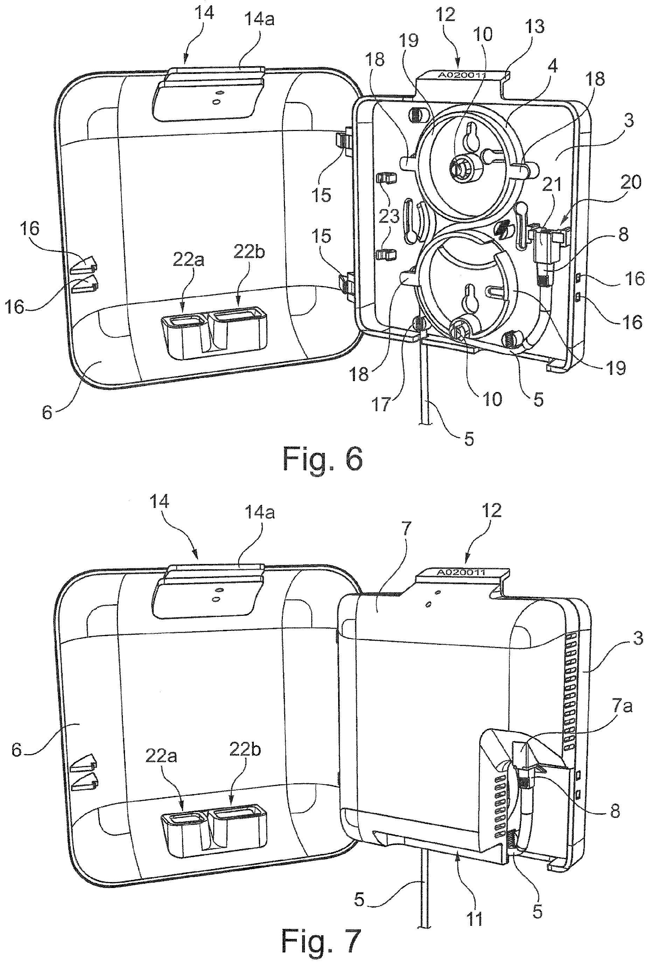

Die in den Figuren dargestellte Netzabschluss-Einrichtung 1 ist zur Vorbereitung eines als FTTH ausgeführten Glasfaseranschlusses an einer Zimmerwand 2 in einem Raum eines Endverbrauchers montiert. Die Netzabschluss-Einrichtung 1 umfasst eine Basiseinheit 3, an der in an sich bekannter Weise ein in einer oder in mehreren Windungen 4 aufgewickeltes Glasfaserkabel 5 aufgenommen ist. Die Basiseinheit 3 ist mit dem darin aufgenommenen Kabel 5 zunächst durch einen abnehmbaren Deckel 6 abgedeckt, welcher form- und kraftschlüssig an der Basiseinheit 3 aufgesteckt ist (Figur 1). Alternativ kann der Deckel 6 auch klappbar mit der Basiseinheit 3 verbunden sein (Figuren 6 und7).

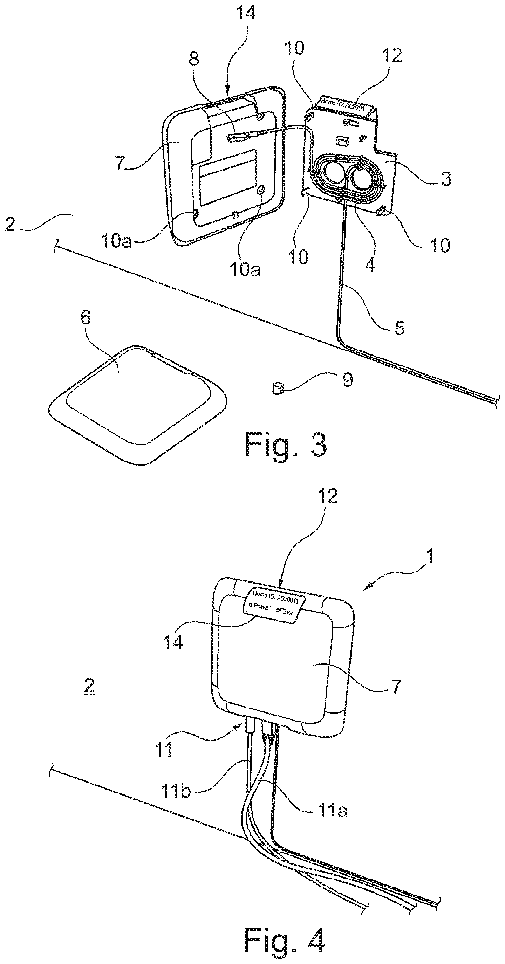

Um von dem Endverbraucher gewünschte Dienste nutzen können, ist an den so vorbereiteten Netzabschluss ein Netzabschluss-Terminal (ONT) 7 an der Basiseinheit 3 anzubringen. Dazu wird zunächst der Deckel 6 von der Basiseinheit 3 entfernt (Figur 2) bzw. aufgeklappt (Figur 6) und das darin zuvor insbesondere in Kabelklemmen 8a klemmend gehaltene Kabelende mit dem bereits daran montierten Stecker 8 gelöst. Eine gegebenenfalls zu Schutzzwecken auf den Stecker 8 aufgesetzte Schutzkappe 9 wird ebenfalls entfernt, so dass der Stecker 8 in eine entsprechende Anschlussbuchse 7a des Netzabschluss-Terminals 7 eingesteckt werden kann (Figur 3).

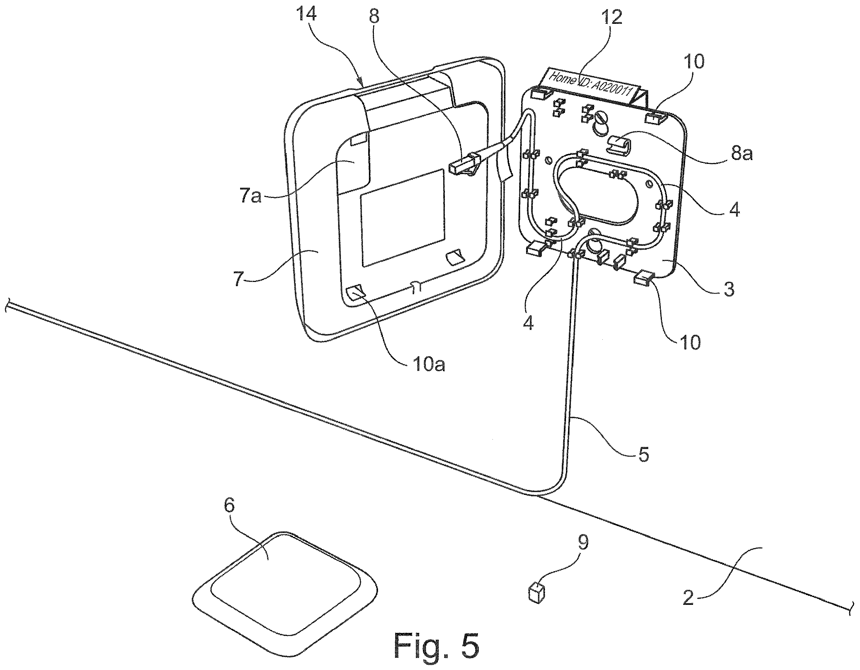

Abschließend wird das Netzabschluss-Terminal 7 mit dem daran angeschlossenen Glasfaserkabel 5 an der Basiseinheit 3 montiert (Figuren 4 und 7). Dazu sind an der Basiseinheit 3 zwei oder drei in der Form von Haltestiften ausgebildete Befestigungsmittel 10 vorgesehen, die formschlüssig und kraftschlüssig in entsprechende Ausnehmungen 10a des Netzabschluss-Terminals 7 eingreifen (Figuren 2, 3 und 6). Bei der in Figur 5 gezeigten Ausführungsform sind die Befestigungsmittel 10 durch vier elastisch federnden Rastnasen ausgebildet, die beim Aufschieben des Netzabschluss-Terminals 7 in vier entsprechend daran ausgebildete Ausnehmungen 10a einrasten. Die optischen Anschlüsse sind bei den Ausführungsformen der Figuren 1 bis 5 hinter dem Netzabschluss-Terminal 7 verdeckt angeordnet, so dass Beschädigungen der Glasfaser vermieden werden. Weitere Geräte, etwa Telefone und/oder Computer und/oder Fernseher können beispielsweise über LAN-Kabel 11a ebenso wie eine externe Stromversorgung 11b des Netzabschluss-Terminals 7 über Anschlussbuchsen 11 angeschlossen werden, die an der Unterseite des Netzabschluss-Terminals 7 angeordnet sind.

Erfindungsgemäß ist an der Basiseinheit 3 eine Kennzeichnung 12 angebracht, über die die Netzabschluss-Einrichtung 1 des Endverbrauchers eindeutig identifiziert werden kann. Diese Kennung 12, beispielsweise eine Rufnummer, ist in dem dargestellten Ausführungsbeispiel unlösbar auf einer Lasche 13 aufgebracht, die am oberen Rand der Basiseinheit 3 von der an der Wand 2 anliegenden Grundfläche der Basiseinheit 3 absteht. Die Lasche 13 hat eine V-förmig nach oben abgewinkelte Zunge, auf der sich die Kennung 12 befindet, so dass sie aus einer schräg von oben verlaufenden Betrachtungsrichtung bequem abgelesen werden kann.

Sowohl in dem Deckel 6 als auch in dem Netzabschluss-Terminal 7 ist jeweils eine Aussparung 14 ausgebildet, die in Form eines Fensters mit durchsichtigem Kunststoff ausgefüllt ist. Durch diese fensterartigen Aussparungen 14 hindurch kann die an der Basiseinheit 3 vorhandene Kennung 12 auch dann leicht von außen erkannt und abgelesen werden, wenn der Deckel 6 und/oder das Netzabschluss-Terminal 7 an der Basiseinheit 3 angebracht ist.

Bei der in den Figuren 6 und 7 gezeigten Ausführungsvariante ist der Deckel mittels einer Scharniereinrichtung 15 klappbar mit der Basiseinheit 3 verbunden. Zum lösbaren Halten des Deckels 6 in der zugeklappten Position sind an der den Scharnieren 15 gegenüberliegenden Seite Rastmittel 16 vorgesehen. Die Aussparung 14 ist hier randlos im Bereich der oberen Kante des Deckels 6 ausgeführt. Aber auch diese nach außen offene Aussparung 14 ist ebenfalls durch eine durchsichtige Kunststoffscheibe 14a ausgefüllt.

Das von unten in die Basiseinheit eintretende Glasfaserkabel 5 verläuft zur Zugentlastung zunächst durch eine Kabelklemme 17. Anschließend ist es um zwei mit Haltenasen 18 versehene zylinderförmige Vorsprünge 19 gewickelt, die als Spindel zur Aufnahme überschüssiger Kabellänge dienen. Der am freien Ende des Glasfaserkabels montierte Stecker 8 ist kraftschlüssig in einer an der Basiseinheit 3 vorgesehenen Halteeinrichtung 20 gehalten, aus der er zum Anschließen eines Netzabschluss-Terminals 7 leicht entnommen werden kann. Die Halteinrichtung 20 umfasst dazu eine Aufnahme 21 mit einer darin integrierten Schutzkappe für den freien Kontaktbereich des Steckers 8. Beim Abziehen des Steckers 8 aus der Aufnahme 21 verbleibt die Schutzkappe somit unverlierbar in der Aufnahme 21.

In seinem unteren Bereich weist der Deckel 6 zwei Öffnungen 22a und 22b auf, die in der zugeklappten Deckelposition vor den unten am Netzabschluss-Terminal 7 angeordneten Anschlussbuchsen 11 liegen. So können beispielsweise ein LAN-Kabel 11a und eine externe Stromversorgung 11b durch die jeweiligen Öffnungen 22a und 22b hindurch bei zugeklapptem Deckel 6 an ein Netzabschluss-Terminal 7 angeschlossen werden. Ein unbeabsichtigtes Öffnen des Deckels 6 bei noch in das Netzabschluss-Terminal 7 eingesteckten Kabeln 11a, 11b kann so verhindert werden.

Zusätzlich ist hier an der Basisstation 3 eine durch zwei Kabelklemmen 23 gebildete Halteeinrichtung vorgesehen, um eine gegebenenfalls auszuführende Spleißverbindung zugkraftentlastet aufnehmen zu können.

## Patentansprüche

1. Kombination aus einer Netzabschluss-Einrichtung (1) für optische Netzwerke und mindestens einem daran anbringbaren Netzabschluss-Terminal (7), welches mindestens ein Benutzermodul für einen oder mehrere Dienste umfasst,
wobei die Netzabschluss-Einrichtung (1)
eine Basiseinheit (3) zur Aufnahme einer oder mehrerer optischer Fasern (5), insbesondere eines Glasfaserkabelendes,
einen Deckel (6), durch den die Basiseinheit (3) abdeckbar oder verschließbar ist, und
Mittel (10) zur Aufnahme und/oder Befestigung eines Netzabschluss-Terminals (7) an der Basiseinheit (3) umfasst,
**dadurch gekennzeichnet,**
**dass** die Basiseinheit (3) eine Kennung (12) aufweist, durch die der Netzabschluss identifizierbar ist,
und **dass** die Kennung (12) derart angebracht ist, dass sie auch bei einem angebrachten Netzabschluss-Terminal (7) von außen sichtbar ist,
wobei der Deckel (6) eine Aussparung (14) aufweist, durch die die Kennung (12) der Basiseinheit (3) sichtbar ist, wenn der Deckel (6) die Basiseinheit (3) abdeckt oder verschließt.

2. Kombination nach Anspruch 1, **dadurch gekennzeichnet, dass** das Netzabschluss-Terminal (7) in seinem Gehäuse eine Aussparung (14) aufweist, durch die die Kennung (12) der Basiseinheit (3) sichtbar ist, wenn das Netzabschluss-Terminal (7) an der Basiseinheit (3) angebracht ist.

3. Kombination nach einem der Ansprüche 1 oder 2, **dadurch gekennzeichnet, dass** die Aussparung (14) im Deckel (6) und/oder im Gehäuse des Netzabschluss-Terminals (7) mit einem durchsichtigen oder transparenten Material gefüllt ist.

4. Kombination nach einem der vorherigen Ansprüche, **dadurch gekennzeichnet, dass** die Kennung (12) in einem oberen Bereich der Basiseinheit (3) derart angebracht ist, dass sie von oben, insbesondere von schräg oben, sichtbar ist.

5. Kombination nach einem der vorherigen Ansprüche, **dadurch gekennzeichnet, dass** die Mittel (10) zur Aufnahme und/oder Befestigung des Netzabschluss-Terminals (7) an der Basiseinheit (3) derart vorgesehen sind, dass das Netzabschluss-Terminal (7) bei abgenommenem Deckel (6) formschlüssig und/oder kraftschlüssig an der Basiseinheit (3) montierbar ist.

6. Kombination nach einem der vorherigen Ansprüche, **dadurch gekennzeichnet, dass** der Deckel (6) zumindest annähernd die gleiche Form und Größe wie das Gehäuse des Netzabschluss-Terminals (7) aufweist.

7. Kombination nach einem der Ansprüche 1 bis 5, **dadurch gekennzeichnet, dass** der Deckel (6) schalenförmig in einer Größe ausgebildet ist, dass das Netzabschluss-Terminal (7) zwischen der Basiseinheit (3) und dem Deckel (6), vorzugsweise in dem Deckel (6), aufnehmbar ist.

8. Kombination nach Anspruch 7, **dadurch gekennzeichnet, dass** der Deckel (6) über eine scharnierartige Verbindung schwenkbar mit der Basiseinheit (3) verbunden ist, wobei das Netzabschluss-Terminal (7) von dem Deckel (6) abdeckbar oder verschließbar ist, wenn es an der Basiseinheit (3) angebracht ist.

9. Kombination nach Anspruch 7 oder 8, **dadurch gekennzeichnet, dass** der Deckel (6) mindestens eine Öffnung (15a, 15b) aufweist, durch die hindurch Kabel (11a, 11b) an ein an die Basiseinheit (3) angebrachtes Netzabschluss-Terminal (7) anschließbar sind.

10. Kombination nach Anspruch 9, **dadurch gekennzeichnet, dass** die Wände der im Deckel (6) vorgesehenen Öffnungen (15a, 15b) in der Form von schräg auf die Anschlussbuchsen (11) des Netzabschluss-Terminals (7) zulaufenden Führungen, insbesondere konusförmig ausgebildet sind.

11. Kombination nach einem der vorherigen Ansprüche, **dadurch gekennzeichnet, dass** an der Basiseinheit (3) mindestens eine Verbindungseinrichtung vorgesehen ist, durch die die optischen Fasern (5) des Kabelendes mit einem weiteren Kabel und/oder mit weiteren Terminals oder Modulen verbindbar sind.

12. Kombination nach einem der vorherigen Ansprüche, **dadurch gekennzeichnet, dass** die Basiseinheit (3) mindestens eine Halteeinrichtung (17) zum formschlüssigen und/oder kraftschlüssigen Halten optischer Fasern (5), welche in der Form eines Glasfaserkabelendes mit einem daran montierten Stecker (8) vorliegen, aufweist.

13. Kombination nach Anspruch 12, **dadurch gekennzeichnet, dass** die Halteinrichtung (17) eine Aufnahme (18) mit einer Schutzkappe (9) für den am Glasfaserkabelende montierten Stecker (8) umfasst, wobei die Schutzkappe (9) derart mit der Aufnahme (18) verbunden ist, dass sie an der Aufnahme (18) verbleibt, wenn der Stecker (8) aus der Aufnahme (18) entnommen wird.

## Claims

1. Combination of a network termination device (1) for optical networks and at least one network termination terminal (7) which can be attached thereto and comprises at least one user module for one or more services,
wherein the network termination device (1) comprises
a base unit (3) for accommodating one or more optical fibres (5), particularly a glass fibre cable end,
a cover (6) by which the base unit (3) can be covered or closed, and
means (10) for accommodating and/or securing a network termination terminal (7) to the base unit (3),
**characterized in that** the base unit (3) comprises an identifier (12) by means of which network termination is identifiable,
and the identifier (12) is mounted in such manner that it is visible from the outside even when a network termination terminal (7) is attached
wherein the cover (6) has a cutout (14) through which the identifier (12) of the base unit (3) is visible when the cover (6) covers or closes the base unit (3).

2. Combination according to Claim 1, **characterized in that** the network termination terminal (7) has a cutout (14) in its housing through which the identifier (12) of the base unit (3) is visible when the network termination terminal (7) is attached to the base unit (3).

3. Combination according to Claim 1 or 2, **characterized in that** the cutout (14) in the cover (6) and/or in the housing of the network termination terminals (7) is filled with a clear or transparent material.

4. Combination according to any one of the preceding claims, **characterized in that** the identifier (12) is mounted in an upper region of the base unit (3) in such manner that it is visible from above, in particular obliquely from above.

5. Combination according to any one of the preceding claims, **characterized in that** the means (10) for accommodating and/or securing the network termination terminal (7) to the base unit (3) are provided in such a way that the network termination terminal (7) can be mounted on the base unit in form-fitting and/or force-fitting manner with the cover removed (6).

6. Combination according to any one of the preceding claims, **characterized in that** the cover (6) has at least approximately the same shape and size as the housing of the network termination terminal (7).

7. Combination according to any one of Claims 1 to 5, **characterized in that** the cover (6) is of concave construction in a size such that the network termination terminal (7) can be accommodated between the base unit (3) and the cover (6), preferably inside the cover (6).

8. Combination according to Claim 7, **characterized in that** the cover (6) is connected to the base unit (3) via a hinge-like connection, wherein the network termination terminal (7) can be covered or closed by the cover (6) when it is attached to the base unit (3).

9. Combination according to Claim 7 or 8, **characterized in that** the cover (6) has at least one opening (15a, 15b) through which cables (11a, 11b) can be attached to a network termination terminal (7) which is mounted on the base unit (3).

10. Combination according to Claim 9, **characterized in that** the walls of the openings (15a, 15b) in the cover (6) are constructed in the form of guides which taper obliquely towards the sockets (11) of the network termination terminal (7) and are in particular conical.

11. Combination according to any one of the preceding claims, **characterized in that** at least one connecting device is provided on the base unit (3), through which the optical fibres (5) of the cable end can be connected to a further cable and/or to further terminals or modules.

12. Combination according to any one of the preceding claims, **characterized in that** the base unit (3) is equipped with at least one holding means (17) for holding in form-fitting and/or force-fitting manner optical fibres (5) which have the form of a glass fibre cable end with a connector (8) mounted thereon.

13. Combination according to Claim 12, **characterized in that** the holding means (17) comprises a receptacle (18) with a protective cap (9) for the connector (8) mounted on the glass fibre cable end, wherein the protective cap (9) is connected to the receptacle (18) in such manner that it remains on the receptacle (18) when the connector (8) is removed from the receptacle (18).

## Revendications

1. Combinaison d'un système de terminaison de réseau (1) destiné à des réseaux optiques et d'au moins terminal de terminaison de réseau (7) susceptible d'être monté sur celui-ci, lequel comprend au moins un module d'abonné pour un ou pour plusieurs services,
le système de terminaison de réseau (1) comprenant
une unité de base (3), destinée à recevoir une ou plusieurs fibres optiques (5), notamment une extrémité de câble optique,
un couvercle (6), permettant de recouvrir ou de fermer l'unité de base (3) et des moyens (10) destinés à recevoir et/ou à fixer un terminal de terminaison de réseau (7) sur l'unité de base (3),
**caractérisée**
**en ce que** l'unité de base (3) comporte une identification (12), permettant d'identifier la terminaison de réseau,
et **en ce que** l'identification (12) est appliquée de sorte à être visible par l'extérieur, même lorsque le terminal de terminaison de réseau (7) est monté, le couvercle (6) comportant une encoche (14) à travers laquelle l'identification (12) de l'unité de base (3) est visible lorsque le couvercle (6) recouvre ou ferme l'unité de base (3).

2. Combinaison selon la revendication 1, **caractérisée en ce que** le terminal de terminaison de réseau (7) comporte dans son boîtier une encoche (14) à travers laquelle l'identification (12) de l'unité de base (3) est visible lorsque le terminal de terminaison de réseau (7) est monté sur l'unité de base (3).

3. Combinaison selon l'une quelconque des revendications 1 ou 2, **caractérisée en ce que** l'encoche (14) dans le couvercle (6) et/ou dans le boîtier du terminal de terminaison de réseau (7) est remplie d'une matière translucide ou transparente.

4. Combinaison selon l'une quelconque des revendications précédentes, **caractérisée en ce que** l'identification (12) est appliquée sur une zone supérieure de l'unité de base (3), de sorte à être visible par le haut, notamment en oblique par le haut.

5. Combinaison selon l'une quelconque des revendications précédentes, **caractérisée en ce que** les moyens (10) destinés à recevoir et/ou à fixer un terminal de terminaison de réseau (7) sont prévus sur l'unité de base (3) de sorte que lorsque le couvercle (6) est retiré, le terminal de terminaison de réseau (7) soit susceptible d'être monté par complémentarité de forme et/ou par complémentarité de force sur l'unité de base (3).

6. Combinaison selon l'une quelconque des revendications précédentes, **caractérisée en ce que** le couvercle (6) présente au moins approximativement la même forme et dimension que le boîtier du terminal de terminaison de réseau (7).

7. Combinaison selon l'une quelconque des revendications 1 à 5, **caractérisée en ce que** le couvercle (6) est conçu en forme de coque dans une dimension telle que le terminal de terminaison de réseau (7) puisse être reçu entre l'unité de base (3) et le couvercle (6), de préférence dans le couvercle (6).

8. Combinaison selon la revendication 7, **caractérisée en ce que** le couvercle (6) est relié par l'intermédiaire d'un assemblage de type charnière avec l'unité de base (3), le terminal de terminaison de réseau (7) étant susceptible d'être recouvert ou fermé par le couvercle (6) lorsqu'il est monté sur l'unité de base (3).

9. Combinaison selon la revendication 7 ou 8, **caractérisée en ce que** le couvercle (6) comporte au moins une ouverture (15a, 15b) à travers laquelle des câbles (11a, 11b) sont susceptibles d'être raccordés sur un terminal de terminaison de réseau (7) monté sur l'unité de base (3).

10. Combinaison selon la revendication 9, **caractérisée en ce que** les parois des ouvertures (15a, 15b) prévues dans le couvercle (6) sont conçues sous la forme de guidages convergeant en oblique vers les prises de raccordement (11) du terminal de terminaison de réseau (7), notamment sous forme conique.

11. Combinaison selon l'une quelconque des revendications précédentes, **caractérisée en ce que** sur l'unité de base (3) est prévu au moins un système de liaison à l'aide duquel les fibres optiques (5) de l'extrémité de câble sont susceptibles d'être reliées avec un câble supplémentaire et/ou avec des terminaux ou modules supplémentaires.

12. Combinaison selon l'une quelconque des revendications précédentes, **caractérisée en ce que** l'unité de base (3) comporte au moins un système de retenue (17), destiné à retenir par complémentarité de forme et/ou par complémentarité de force des fibres optiques (5), qui se présente sous la forme d'une extrémité de câble optique avec un connecteur (8) monté sur celle-ci.

13. Combinaison selon la revendication 12, **caractérisée en ce que** le système de retenue (17) comprend un logement (18) pourvu d'un capuchon protecteur (9) destiné au connecteur (8) monté sur l'extrémité de câble optique, le capuchon protecteur (9) étant relié avec le logement (18) de sorte à rester sur le logement (18) lorsque le connecteur (8) est retiré du logement (18).
